# DEMANDE DE BREVET EUROPEEN

(11) **EP 2 182 449 A1**
(43) Date de publication de la demande: **05.05.2010**
(21) Numéro de dépôt: 09174623.0
(22) Date de dépôt: 30.10.2009
(51) Int. Cl.: G06F 17/30

(54) **Procédé de détermination de critères d'intérêt d'un utilisateur d'un terminal à partir d'un contenu multimédia visionné par l'utilisateur**

(30) Priorité: 04.11.2008 FR 0806148
(71) Demandeur: Alcatel Lucent, 75008 Paris (FR)
(72) Inventeur: Senot, Christophe, 91620, NOZAY (FR); Aghasaryan, Armen, 91620, NOZAY (FR); Betge-Brezetz, Stéphane, 91620, NOZAY (FR); Bernier, Cédric, 91620, NOZAY (FR)
(74) Mandataire: Sciaux, Edmond

(57) **Abrégé**

L'invention concerne un procédé de détermination de critères d'intérêt d'un utilisateur (1) d'un terminal à partir d'un contenu multimédia visionné par l'utilisateur (1), lesdits critères d'intérêt permettant de délivrer des contenus de données adaptés à l'utilisateur (1), ledit procédé comprenant les étapes suivantes:
- on vérifie si ledit contenu visionné est adapté pour être analysé de manière à reconnaître une représentation graphique caractéristique,
- on reconnaît au moins une représentation graphique caractéristique affichée dans ledit contenu visionné,
- on identifie ladite représentation graphique caractéristique par au moins un mot, et
- on analyse de façon sémantique ledit au moins un mot, de manière à déterminer au moins un critère d'intérêt de l'utilisateur (1).

L'invention concerne encore un procédé pour délivrer des contenus de données adaptés à un utilisateur d'un terminal, et des dispositifs pour la mise en oeuvre de tels procédés.

## Description

La présente invention concerne un procédé de détermination de critères d'intérêt d'un utilisateur d'un terminal à partir d'un contenu multimédia visionné par l'utilisateur. Les critères d'intérêt selon l'invention permettent de délivrer des contenus de données adaptés à l'utilisateur et d'enrichir les connaissances sur l'utilisateur.

L'invention concerne encore un procédé pour délivrer des contenus de données adaptés à un utilisateur d'un terminal.

L'invention concerne en outre un dispositif de détermination de critères d'intérêt d'un utilisateur d'un terminal à partir d'un contenu multimédia visionné par l'utilisateur et un dispositif pour délivrer des contenus de données adaptés à un utilisateur d'un terminal pour la mise en oeuvre de tels procédés.

Le terminal peut être par exemple un téléphone mobile ou fixe, un assistant personnel numérique (ou PDA), un décodeur de programmes de télévision ou vidéos cryptés, un équipement de réception de programmes de télévision de type « Set-top box », un équipement de réception de programmes vidéos ou musicaux, ou d'un ordinateur fixe ou portable, ou un équipement embarqué dans un véhicule (voiture, camion, bus, train, et analogues).

Les contenus de données à délivrer à l'utilisateur sont par exemple des contenus spontanés. On entend ici par contenu spontané des ensembles de données définissant un programme vidéo, ou audio (radiophonique ou musical), ou multimédia ou encore un fichier informatique de données (ou « data »), dont la transmission n'est pas forcément le résultat d'une demande de l'utilisateur du terminal.

Un tel contenu spontané peut être délivré de manière indépendante, en aggrégation avec un autre contenu ou encore en association avec une application.

On connaît des systèmes de transmission de contenus spontanés par exemple en utilisant des moyens de communication traditionnels comme la télévision, la radio ou encore les journaux et les magazines.

On connaît également des systèmes de transmission de contenus avec des moyens de communication comme la télécopie, ou encore la technologie SMS pour « Short Message Service » dans la téléphonie mobile.

Toutefois, les contenus spontanés sont transmis de façon aléatoire aux utilisateurs sans répondre à un besoin exprimé de l'utilisateur.

De plus, afin d'atteindre un grand nombre d'utilisateurs les fournisseurs de contenus spontanés transmettent des contenus censés correspondre au plus gros sous-ensemble d'utilisateurs.

En effet, l'utilisateur n'a pas toujours la possibilité d'indiquer des préférences concernant des contenus spontanés à recevoir.

En conséquence, les utilisateurs peuvent ne pas être réceptifs aux contenus spontanés transmis, diminuant ainsi l'efficacité de cette transmission de contenus spontanés.

L'invention a donc pour but d'améliorer les services connus de contenus spontanés, en permettant de présenter aux utilisateurs des contenus personnalisés et adaptés à chaque utilisateur.

À cet effet, l'invention a pour objet un procédé de détermination de critères d'intérêt d'un utilisateur d'un terminal à partir d'un contenu multimédia visionné par l'utilisateur, lesdits critères d'intérêt permettant de délivrer des contenus de données adaptés à l'utilisateur, ledit procédé comprenant les étapes suivantes :
- on vérifie si ledit contenu visionné est adapté pour être analysé de manière à reconnaître une représentation graphique caractéristique,
- on reconnaît au moins une représentation graphique caractéristique affichée dans ledit contenu visionné,
- on identifie ladite représentation graphique caractéristique par au moins un mot, et
- on analyse de façon sémantique ledit au moins un mot, de manière à déterminer au moins un critère d'intérêt de l'utilisateur.

Le procédé de détermination de critères d'intérêt d'un utilisateur selon l'invention peut en outre comporter une ou plusieurs caractéristiques suivantes, prises séparément ou en combinaison :
- ledit contenu est affiché sur un moyen d'affichage, ledit procédé comprenant les étapes suivantes :
   - on analyse le mouvement des yeux de l'utilisateur de manière à identifier une zone du moyen d'affichage regardée par l'utilisateur,
   - on détermine si ladite zone identifiée correspond à l'affichage d'une représentation graphique caractéristique reconnue, de manière à détecter si l'utilisateur regarde au moins une représentation graphique caractéristique reconnue,
   - on évalue la durée pendant laquelle l'utilisateur regarde ladite représentation graphique caractéristique,
   - on détermine à partir de ladite durée évaluée, un paramètre représentatif de l'intérêt de l'utilisateur pour chaque représentation graphique caractéristique regardée,
   - on sélectionne à partir desdits paramètres représentatifs, au moins une représentation graphique caractéristique pour une analyse sémantique dudit au moins un mot identifiant ladite représentation graphique caractéristique.
- ledit procédé comprend une étape dans laquelle on définit un réseau sémantique pour l'analyse sémantique desdits mots,
- ledit procédé comprend une étape dans laquelle on mémorise et on met à jour les critères d'intérêt déterminés par l'analyse sémantique dans une base de données de profils d'utilisateurs,
- ledit procédé comprend les étapes suivantes :
   - on reçoit au moins une information concernant l'ensemble des contenus multimédia visionnés par l'utilisateur, ainsi que les représentations graphiques caractéristiques reconnues dans chaque contenu multimédia visionné par l'utilisateur,
   - on calcule pour chaque représentation graphique caractéristique reconnue une fréquence d'affichage associée, et
   - on mémorise dans la base de données de profils d'utilisateurs lesdits mots identifiant les représentations graphiques caractéristiques reconnues et les fréquences d'affichage associées,
- lesdits critères d'intérêt déterminés comportent des données descriptives déduites relatives à ladite représentation graphique caractéristique et/ou audit contenu visionné,
- ledit contenu visionné est associé à un contexte descriptif et dans lequel les données descriptives déduites permettent de mettre à jour ledit contexte.

L'invention concerne encore un procédé pour délivrer des contenus de données adaptés à un utilisateur d'un terminal, comprenant les étapes suivantes :
- on reçoit des critères d'intérêt déterminés par un procédé de détermination de critères d'intérêt à partir d'un contenu de données visionné par l'utilisateur,
- on sélectionne un contenu de données à délivrer à l'aide des critères d'intérêt reçus,
- on délivre ledit contenu de données sélectionné.

Le procédé pour délivrer des contenus de données adaptés selon l'invention peut en outre comporter une ou plusieurs caractéristiques suivantes, prises séparément ou en combinaison :
- ledit contenu visionné est associé à un contexte descriptif, ledit procédé comportant une étape dans laquelle on sélectionne un contenu de données à délivrer à partir du contexte dudit contenu visionné par l'utilisateur mis à jour à l'aide desdits critères d'intérêt,
- ledit procédé comprend une étape dans laquelle on sélectionne un contenu de données à délivrer à partir de fréquences d'affichage de représentations graphiques caractéristiques reconnues mémorisées dans une base de données de profils d'utilisateurs,
- ledit contenu à délivrer est un contenu spontané promotionnel.

L'invention concerne également un dispositif de détermination de critères d'intérêt d'un utilisateur d'un terminal à partir d'un contenu multimédia visionné par l'utilisateur comprenant au moins un moyen de traitement pour :
- vérifier si ledit contenu visionné est adapté pour être analysé de manière à reconnaître une représentation graphique caractéristique,
- reconnaître au moins une représentation graphique caractéristique affichée dans ledit contenu visionné,
- identifier ladite représentation graphique caractéristique par au moins un mot, et
- analyser de façon sémantique ledit au moins un mot, de manière à déterminer au moins un critère d'intérêt de l'utilisateur.

L'invention concerne aussi un dispositif pour délivrer des contenus spontanés adaptés à un utilisateur d'un terminal, comportant au moins un moyen de traitement pour :
- recevoir des critères d'intérêt transmis par un dispositif de détermination de critères d'intérêt à partir d'un contenu multimédia visionné par l'utilisateur,
- sélectionner un contenu spontané à délivrer à partir de ces critères d'intérêt, et
- délivrer ledit contenu sélectionné.

D'autres caractéristiques et avantages de l'invention ressortiront de la description suivante, donnée à titre d'exemple, sans caractère limitatif, en regard des dessins annexés sur lesquels :
- les figures 1a et 1b représentent des exemples des étapes successives d'un procédé de détermination de critères d'intérêt selon l'invention,
- la figure 2 représente un exemple de réseau sémantique pour la mise en oeuvre du procédé des figures 1a et 1b,
- la figure 3 illustre les étapes successives d'un procédé pour délivrer des contenus de données adaptés à un utilisateur selon l'invention, et
- la figure 4 représente un exemple de réalisation de moyens pour la mise en oeuvre d'un procédé de détermination de critères d'intérêt et d'un procédé pour délivrer des contenus de données adaptés à un utilisateur selon l'invention.

L'invention concerne la sélection de contenus de données à présenter à un utilisateur d'un terminal.

Le terminal peut être par exemple un téléphone mobile ou fixe, un assistant personnel numérique (ou PDA), un décodeur de programmes de télévision ou vidéos cryptés, un équipement de réception de programmes de télévision de type « Set-top box », un équipement de réception de programmes vidéos ou musicaux, ou d'un ordinateur fixe ou portable, ou un équipement embarqué dans un véhicule (voiture, camion, bus, train, et analogues).

Les contenus de données à délivrer à l'utilisateur sont par exemple des contenus spontanés. On entend ici par contenu spontané des ensembles de données définissant un programme vidéo, ou audio (radiophonique ou musical), ou multimédia ou encore un fichier informatique de données (ou « data »), dont la transmission n'est pas forcément le résultat d'une demande de l'utilisateur du terminal.

Un tel contenu spontané peut être délivré de manière indépendante, en aggrégation avec un autre contenu ou encore en association avec une application.

En vue d'améliorer la pertinence des contenus présentés à un utilisateur et d'enrichir les connaissances sur l'utilisateur, on propose :
- un procédé de détermination de critères d'intérêt de l'utilisateur permettant de mieux cibler les contenus de données à délivrer à l'utilisateur, et
- un procédé pour délivrer des contenus de données adaptés à l'utilisateur permettant de déterminer un contenu adapté à délivrer à l'utilisateur en tirant partie des critères d'intérêt déterminés.

On décrira tout d'abord ces procédés selon l'invention puis les dispositifs permettant leur mise en oeuvre.

### Procédé de détermination de critères d'intérêt d'un utilisateur d'un terminal à partir d'un contenu multimédia visionné par l'utilisateur

Les critères d'intérêt peuvent comporter des informations personnelles sur l'utilisateur 1 comme ses activités, ses habitudes ou encore des préférences concernant un domaine de consommation, une catégorie de produits ou un ensemble de marques.

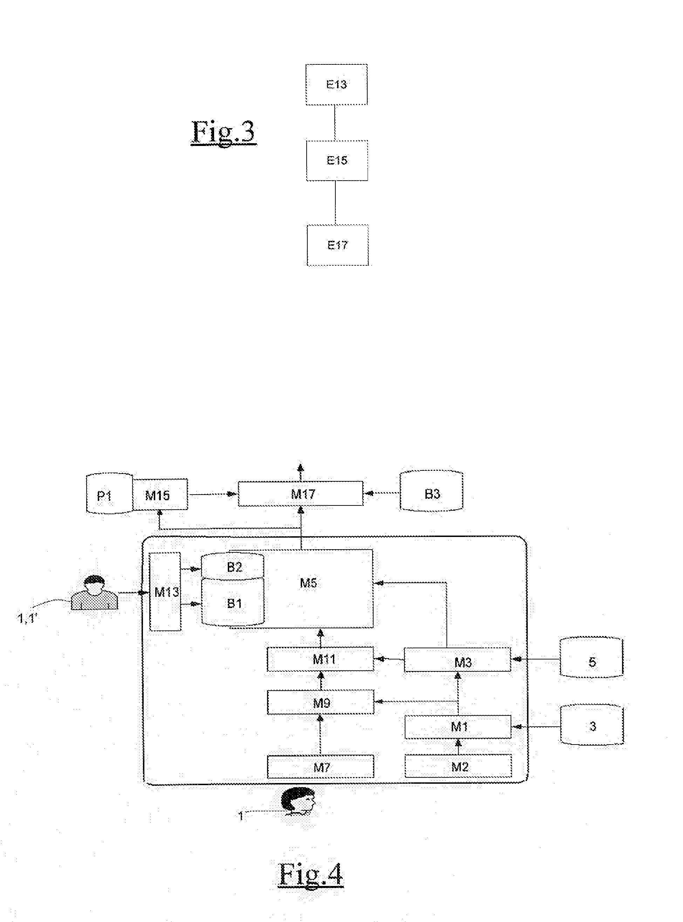

Ces critères d'intérêt peuvent être configurés par l'utilisateur 1, par exemple dans une base de données de profils d'utilisateurs P1 (figure 4), et sont adaptables de manière à toujours correspondre au mieux à l'utilisateur 1. Pour cela, on prend en compte les représentations graphiques caractéristiques qui apparaissent dans les contenus multimédia visionnés par l'utilisateur 1. Dans ce cas, le terminal comporte un moyen d'affichage, par exemple un écran, sur lequel sont affichés les contenus afin de permettre à l'utilisateur 1 de les visionner.

Dans la suite de la description, on choisit comme exemple de représentation graphique caractéristique, un logo identifiant une marque ou un produit.

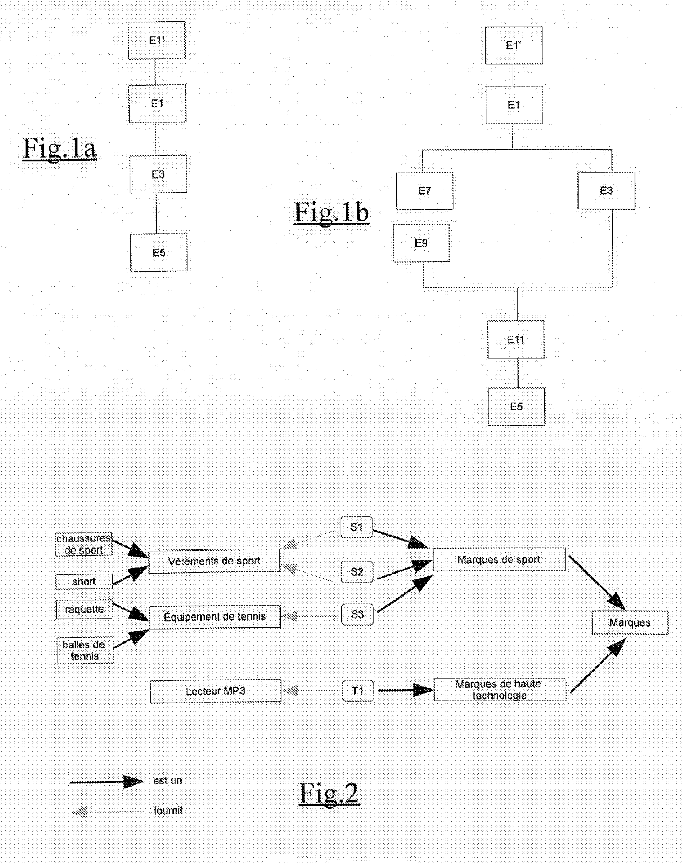

En référence aux figures 1a et 4, lorsque l'utilisateur 1 visionne un contenu multimédia, on vérifie lors d'une première étape E1 si le contenu est adapté pour être analysé. Plus précisément, on vérifie si ce contenu représente un contenu pertinent permettant de découvrir des critères d'intérêt de l'utilisateur 1, puis on sélectionne les contenus à analyser lorsqu'ils sont considérés comme pertinents.

Pour un résultat optimal des analyses des contenus visionnés, on peut par exemple écarter les contenus publicitaires.

Selon le mode de réalisation décrit, cette sélection s'effectue en se basant sur les informations descriptives généralement associées aux contenus, enregistrées dans un système 3 de gestion de contenu, en anglais CMS pour "Content Management System".

Les contenus sélectionnés peuvent être des contenus en train d'être visionnés par l'utilisateur 1 ou alors des contenus déjà visionnés. Lorsque les contenus ont déjà été visionnés, le procédé comprend une étape dans laquelle on reçoit des informations permettant de retrouver ces contenus, par exemple une date de délivrance, des informations d'identification.

À la suite de la sélection d'un contenu, on analyse à l'étape E3 le contenu de manière à découvrir et reconnaître des logos affichés dans le contenu visionné. Pour une meilleur optimisation, cette analyse peut être effectuée en avance si le type de contenu le permet (par exemple la diffusion d'un film ou d'une série).

Cette étape est généralement suivie d'une identification du logo reconnu par un mot, par exemple à l'aide d'un répertoire 5. Le répertoire 5 comporte des logos et des mots identifiant des marques ou des produits correspondants. Dans ce cas, on prévoit :
- une étape de comparaison du logo reconnu avec les logos répertoriés, et
- lorsque le logo reconnu correspond à un logo répertorié, une étape d'association du mot correspondant au logo répertorié avec le logo reconnu, de manière à identifier le logo reconnu par le mot correspondant.

On peut également déterminer des informations de temps comme un moment d'affichage et une durée d'affichage, ou encore des informations de position du logo par rapport au contenu visionné.

Enfin, lors d'une étape E5 on analyse de façon sémantique le mot, de manière à déterminer au moins un critère d'intérêt de l'utilisateur 1.

De nouveaux critères d'intérêt de l'utilisateur 1 peuvent ainsi être déterminés régulièrement, ces critères d'intérêt étant adaptés à l'utilisateur 1 au cours du temps.

Afin d'améliorer la pertinence de ces critères d'intérêt déterminés, on peut prévoir en outre d'apprécier le niveau d'intérêt de l'utilisateur 1 pour un logo lorsque ce logo s'affiche sur l'écran du terminal.

À cet effet, comme l'illustre la figure 1b, on analyse lors d'une étape E7 le mouvement des yeux de l'utilisateur 1 de manière à identifier une zone du moyen d'affichage regardée par l'utilisateur 1. Plus précisément, on capture des images des yeux de l'utilisateur 1 puis on analyse ces images capturées pour déterminer la direction du regard de l'utilisateur 1 et identifier ainsi la zone regardée.

La zone regardée est identifiée par exemple par des informations de position de cette zone regardée par rapport au contenu visionné ainsi que des informations de temps comme le moment où l'utilisateur commence à regarder cette zone.

Ensuite à l'étape E9, on évalue la durée pendant laquelle l'utilisateur 1 regarde la zone identifiée.

Puis on détermine si cette zone identifiée correspond à l'affichage d'un logo reconnu, de manière à détecter si l'utilisateur 1 regarde ce logo, et évaluer la durée pendant laquelle l'utilisateur 1 regarde le logo. Pour cela on peut comparer les informations de temps et de position relatives au logo avec les informations de temps et de position relatives à la zone regardée par l'utilisateur 1.

A l'étape E11, on détermine à partir de la durée évaluée, un paramètre représentatif de l'intérêt de l'utilisateur 1 pour chaque logo découvert.

Selon un mode de réalisation particulier, ce paramètre représentatif est une valeur numérique qui peut être négative lorsque l'on détecte par l'analyse du mouvement des yeux que l'attention de l'utilisateur 1 n'est pas portée sur le logo découvert dans le contenu visionné, et bien entendu qui est positive lorsque l'attention de l'utilisateur 1 est portée sur le logo.

Une valeur négative traduit dans ce cas un non-intérêt de l'utilisateur 1 pour le logo détecté tandis qu'une valeur positive traduit un intérêt de l'utilisateur 1.

À partir des paramètres représentatifs, on peut alors sélectionner au moins un mot identifiant un logo pour une analyse sémantique à l'étape E5.

Les mots sélectionnés sont par exemple tous les mots identifiant les logos pour lesquels la valeur numérique est positive.

Selon une alternative, on peut par exemple définir un seuil de référence, auquel on compare les valeurs positives, et dans ce cas, on sélectionne les mots identifiant les logos pour lesquels la valeur est au dessus de ce seuil de référence.

Ainsi, on obtient un procédé optimisé dans lequel les critères d'intérêt sont déduits à partir des logos qui suscitent un intérêt chez l'utilisateur 1.

Par ailleurs, de manière à pouvoir analyser de façon sémantique les mots identifiant les logos découverts, on peut prévoir une étape E1' (figures 1a,1b) dans laquelle on définit un réseau sémantique par la suite mémorisé par exemple dans une base de données B1 (figure 4). Dans ce réseau sémantique, l'utilisateur 1 ou un administrateur 1' peut indiquer notamment des marques, des produits, des catégories de produits, des domaines de consommation, ainsi que les relations entre ces différents éléments.

Un exemple d'une partie d'un réseau sémantique relatif aux marques est illustré sur la figure 2. Dans cet exemple, on a défini :
- deux domaines de consommation pour les marques, on retrouve ainsi d'une part les « Marques de sport » et d'autre part les « Marques de haute technologie »,
- un ensemble de marques S1,S2,S3,T1,
- des catégories de produits « Vêtements de sport, Équipement de tennis, Lecteur MP3 » et,
- des produits « chaussures de sport, short, raquettes, balles de tennis ».

En outre, les relations entre ces éléments sont représentés à l'aide de flèches indiquant une appartenance ou une fourniture.

On comprend donc de la figure 2 que :
- les marques S1,S2,S3 sont des marques de sport, tandis que la marque T1 est une marque de haute technologie,
- les marques S1 et S2 fournissent des vêtements de sport, la marque S3 fournit en équipement de tennis, et la marque T1 fournit des lecteurs MP3, et que
- les éléments « chaussures de sport, short » sont des vêtements de sport et les éléments « raquettes, balles de tennis » sont des équipements de tennis.

De plus, l'utilisateur 1 ou l'administrateur 1' peut également définir un ensemble de règles d'inférence permettant, en combinaison avec le réseau sémantique mémorisé, de déduire des critères d'intérêt de l'utilisateur 1 à partir des mots identifiant les logos.

Cet ensemble de règles d'inférence est mémorisé par exemple dans une base de données B2 (figure 4).

Chaque règle d'inférence est de la forme « Si 'prémisse' alors 'conclusion' », la prémisse étant la partie à mettre en correspondance avec les données d'entrée. Un exemple de règle d'inférence est « Si logo détecté = marque, si aucun contenu à délivrer ne se réfère à la marque détectée, alors critères d'intérêt = marques similaires ». On entend ici par marques similaires, des marques relatives au même domaine de consommation. En utilisant les données du réseau sémantique, si la marque détectée est la marque S1, les critères d'intérêt retournés sont donc les marques S2,S3. Les trois marques S1,S2,S3 étant des marques de sport.

Ainsi, dans cet exemple le résultat de l'analyse sémantique est une liste des marques S2,S3 similaires à la marque S1 reconnue dans le contenu visionné. Comme exemples illustratifs et non limitatifs de résultats de l'analyse sémantique lorsque la marque détectée est S1, on peut citer notamment, une catégorie générale de produits « Vêtements de sport », un domaine de consommation général « sport », une liste de produits « chaussures de sport, short ».

On mémorise ensuite les critères d'intérêt déterminés par l'analyse sémantique dans la base de données de profils d'utilisateurs P1, de manière à mettre à jour les critères d'intérêt de l'utilisateur 1 et ainsi enrichir les connaissances sur l'utilisateur 1 (figure 4).

On peut également mémoriser dans la base de données de profils d'utilisateurs P1 les fréquences d'affichage des logos dans les contenus visionnés par l'utilisateur 1.

À cet effet, on reçoit au moins une information concernant l'ensemble des contenus multimédia visionnés par l'utilisateur 1, ainsi que les logos reconnus dans chaque contenu visionné, et on calcule pour chaque logo une fréquence d'affichage associée.

Les critères d'intérêt déterminés peuvent en outre comporter des données descriptives déduites relatives au logo reconnu ou au contenu visionné.

Par exemple, si pendant toute la durée du contenu visionné par l'utilisateur 1 une marque de sport est affichée, on en déduit que le contenu visionné concerne le sport.

Lorsque les données descriptives déduites concernent le contenu visionné, elles permettent de mettre à jour le contexte descriptif associé au contenu visionné, par exemple disponible dans un guide de programmes électronique, en anglais "EPG" pour "Electronic Program Guide".

En outre, on peut prévoir une étape de transmission des critères d'intérêt déterminés à un dispositif pour délivrer des contenus de données adaptés à l'utilisateur.

On comprend donc qu'avec un tel procédé de détermination de critères d'intérêt, de nouveaux critères d'intérêt de l'utilisateur 1 sont régulièrement découverts, afin de toujours correspondre au mieux à l'utilisateur 1. Ces critères d'intérêt peuvent alors servir de critères pour sélectionner des contenus de données personnalisés et adaptés à délivrer à l'utilisateur 1.

Bien entendu, on comprend aisément que l'ordre de mise en oeuvre des étapes de ce procédé de détermination de critères d'intérêt peut pour certaines étapes être intervertit sans aller à l'encontre de l'esprit de la présente invention.

### Procédé pour délivrer des contenus de données adaptés à un utilisateur d'un terminal

Le procédé pour délivrer des contenus de données tire pleinement bénéfice de l'enrichissement continuel des critères d'intérêts de l'utilisateur 1. Selon un mode de réalisation de l'invention, le contenu à délivrer est un contenu spontané promotionnel.

Ainsi, comme l'illustre la figure 3, on reçoit lors d'une étape E13 des critères d'intérêt déterminés par un procédé de détermination de critères d'intérêt selon l'invention, on sélectionne lors d'une étape E15 un contenu de données à délivrer à l'aide de ces critères d'intérêt et d'informations descriptives de contenus à délivrer mémorisées par exemple dans une base de données B3, puis on délivre à l'étape E17 le contenu sélectionné à l'utilisateur 1.

Pour sélectionner un contenu de données à délivrer, on peut également se baser sur le contexte descriptif associé au contenu visionné par l'utilisateur 1 mis à jour à l'aide des critères d'intérêt.

Bien entendu, lors de cette étape de sélection, on prend en compte les informations comprises dans la base de données de profils d'utilisateurs P1.

En alternative, on prend en compte les fréquences d'affichage des logos dans les contenus visionnés par l'utilisateur 1, mémorisées dans la base de données de profils d'utilisateurs P1.

On comprend donc qu'avec un tel procédé pour délivrer des contenus de données adaptés à l'utilisateur 1, ce dernier est plus réceptif aux contenus spontanés qui lui sont délivrés puisque ces contenus lui sont personnalisés et adaptés régulièrement à partir de ses critères d'intérêt.

Bien entendu, l'ordre des étapes de ce procédé pour délivrer des contenus adaptés à l'utilisateur peut également être intervertit sans aller à l'encontre de l'esprit de l'invention.

On va maintenant présenter, en référence à la figure 4, un exemple illustratif et non limitatif de moyens pour la mise en oeuvre de ces procédés selon l'invention.

### Dispositif de détermination de critères d'intérêt d'un utilisateur à partir d'un contenu multimédia visionné par l'utilisateur

Selon l'invention, un dispositif de détermination de critères d'intérêts permet la mise en oeuvre d'un procédé de détermination de critères d'intérêt d'un utilisateur 1 tel que décrit précédemment.

Comme on le constate sur la figure 4, le dispositif de détermination comprend au moins un moyen de sélection M1 pour :
- vérifier si un contenu est adapté pour être analysé de manière à reconnaître une représentation graphique caractéristique, et
- sélectionner les contenus pertinents à analyser en se basant, par exemple sur les informations descriptives généralement associées aux contenus, enregistrées dans le système 3 de gestion de contenu, en anglais CMS pour "Content Management System".

Le dispositif de détermination comporte également un moyen d'identification M2 pour transmettre au moyen de sélection M1 des informations permettant de retrouver des contenus qui ont déjà été visionnés, par exemple une date de délivrance, des informations d'identification.

De plus, le dispositif de détermination comprend au moins un moyen de reconnaissance M3 pour analyser un contenu sélectionné de manière à découvrir et reconnaître des logos.

Ce moyen de reconnaissance M3 permet en outre d'identifier un logo reconnu par un ou plusieurs mots ( sémantique associée), par exemple à l'aide du répertoire 5 comportant des logos et des mots correspondants. Dans ce cas, le moyen de reconnaissance M3 comprend :
- un comparateur de logos reconnus avec les logos répertoriés, et
- un moyen d'association pour, lorsqu'un logo reconnu correspond à un logo répertorié, associer le mot correspondant au logo répertorié avec le logo reconnu.

Le moyen de reconnaissance M3 permet également de déterminer des informations de temps comme un moment d'affichage et une durée d'affichage, ou encore des informations de position du logo dans le contenu visionné.

Le dispositif de détermination comprend en outre au moins un moyen de détermination M5 pour analyser de façon sémantique le mot, et déterminer au moins un critère d'intérêt de l'utilisateur 1.

En variante, le dispositif de détermination permet d'apprécier l'intérêt de l'utilisateur 1 pour un logo lorsqu'il s'affiche sur l'écran du terminal.

À cet effet, le dispositif de détermination comprend au moins un moyen M7 d'analyse du mouvement des yeux de l'utilisateur 1 de manière à identifier une zone du moyen d'affichage regardée par l'utilisateur 1. Selon un mode de réalisation, ce moyen M7 est un moyen d'oculométrie, en anglais "Eye tracking". De façon préférentielle, ce moyen d'oculométrie comporte une caméra pour capturer des images des yeux de l'utilisateur 1, un récepteur des images capturées, et un moyen de traitement pour déterminer la direction du regard de l'utilisateur 1 et identifier ainsi la zone regardée.

Le moyen M7 peut par exemple déterminer des informations de position de cette zone regardée par rapport au contenu visionné ainsi que des informations de temps comme le moment à partir duquel l'utilisateur 1 regarde cette zone, pour ainsi identifier la zone regardée.

Par ailleurs, le dispositif de détermination comprend au moins un moyen d'évaluation M9, pour, lorsqu'une zone est identifiée, évaluer la durée pendant laquelle l'utilisateur 1 regarde cette zone identifiée.

Le dispositif de détermination permet également de déterminer si cette zone identifiée correspond à l'affichage d'un logo reconnu, de manière à détecter si l'utilisateur 1 regarde ce logo, et ainsi évaluer la durée pendant laquelle l'utilisateur regarde le logo. Pour cela, le dispositif de détermination peut comprendre un comparateur des informations de temps et de position relatives au logo avec les informations de temps et de position relatives à la zone regardée par l'utilisateur 1.

Le dispositif de détermination comprend par exemple un calculateur M11 apte à calculer à partir de la durée évaluée, un paramètre représentatif de l'intérêt de l'utilisateur 1 pour chaque logo découvert, le paramètre représentatif étant dans l'exemple décrit une valeur numérique.

De plus, le dispositif de détermination comporte un moyen de sélection pour sélectionner à partir des paramètres représentatifs, au moins un mot identifiant un logo pour une analyse sémantique. Les mots identifiant les logos sélectionnés sont par exemple tous les mots pour lesquels la valeur numérique est positive.

Selon une alternative, le dispositif de détermination peut comprendre un comparateur des valeurs calculées avec un seuil de référence prédéterminé. Dans ce cas, les mots sélectionnés sont les mots identifiant les logos pour lesquels la valeur numérique est au dessus du seuil de référence.

Par ailleurs, le dispositif de détermination comprend au moins une interface graphique M13 permettant à l'utilisateur 1 ou à l'administrateur 1' de définir un réseau sémantique et de le mémoriser par exemple dans la base de données B1.

De plus, l'interface graphique M13 peut permettre à l'utilisateur 1 ou l'administrateur 1' de définir un ensemble de règles d'inférence permettant en combinaison avec le réseau sémantique mémorisé, au moyen de détermination M5 de déterminer des critères d'intérêt de l'utilisateur 1 à partir des mots identifiant les logos.

Par ailleurs, le dispositif de détermination peut comprendre au moins un moyen de mémorisation M15 pour mémoriser les critères d'intérêt déterminés par l'analyse sémantique dans la base de données de profils d'utilisateurs P1, de manière à enrichir les connaissances sur l'utilisateur 1.

Selon un mode de réalisation de l'invention, le moyen de mémorisation M15 mémorise dans la base de données de profils d'utilisateurs P1 des fréquences d'affichage des logos dans les contenus visionnés par l'utilisateur. Pour cela, le dispositif de détermination comporte au moins un moyen de réception d'informations concernant l'ensemble des contenus multimédia visionnés par l'utilisateur 1, ainsi que des logos reconnus dans chaque contenu visionné, et au moins un calculateur d'une fréquence d'affichage associée pour chaque logo.

En outre, le dispositif de détermination peut comprendre au moins un moyen de transmission des critères d'intérêt déterminés à un dispositif pour délivrer des contenus adaptés à l'utilisateur.

### Dispositif pour délivrer des contenus spontanés adaptés à un utilisateur

Selon l'invention, un dispositif pour délivrer des contenus spontanés adaptés à l'utilisateur 1 permet la mise en oeuvre du procédé pour délivrer des contenus adaptés à l'utilisateur 1 tel que décrit précédemment.

Pour cela, le dispositif pour délivrer des contenus adaptés comporte au moins un moyen de traitement M17 pour :
- recevoir des critères d'intérêt transmis par un dispositif de détermination de critères d'intérêt à partir d'un contenu multimédia visionné par l'utilisateur 1,
- sélectionner un contenu à délivrer à partir de ces critères d'intérêt reçus et d'informations descriptives de contenus à délivrer mémorisées par exemple dans la base de données B3, et
- délivrer le contenu sélectionné.

Le moyen de traitement M17 peut également sélectionner un contenu à délivrer en se basant sur le contexte descriptif associé au contenu visionné par l'utilisateur 1 mis à jour à l'aide des critères d'intérêt déterminés.

Bien entendu le moyen de traitement M17 prend en compte les informations disponibles dans la base de données de profils d'utilisateurs P1 pour sélectionner un contenu.

En alternative, le moyen de traitement M17 peut aussi prendre en compte les fréquences d'affichage des logos dans les contenus visionnés par l'utilisateur 1, mémorisées dans la base de données de profils d'utilisateurs P1.

On comprend donc que les critères d'intérêt de l'utilisateur évoluent régulièrement de façon à toujours correspondre à l'utilisateur, et permettent de présenter à l'utilisateur des contenus spontanés qui lui sont personnalisés et adaptés.

## Revendications

1. Procédé de détermination de critères d'intérêt d'un utilisateur (1) d'un terminal à partir d'un contenu multimédia visionné par l'utilisateur (1), lesdits critères d'intérêt permettant de délivrer des contenus de données adaptés à l'utilisateur (1), ledit procédé comprenant les étapes suivantes :
- on vérifie si ledit contenu visionné est adapté pour être analysé de manière à reconnaître une représentation graphique caractéristique,
- on reconnaît au moins une représentation graphique caractéristique affichée dans ledit contenu visionné,
- on identifie ladite représentation graphique caractéristique par au moins un mot, et
- on analyse de façon sémantique ledit au moins un mot, de manière à déterminer au moins un critère d'intérêt de l'utilisateur (1).

2. Procédé selon la revendication 1, dans lequel ledit contenu est affiché sur un moyen d'affichage, ledit procédé comprenant les étapes suivantes :
- on analyse le mouvement des yeux de l'utilisateur de manière à identifier une zone du moyen d'affichage regardée par l'utilisateur,
- on détermine si ladite zone identifiée correspond à l'affichage d'une représentation graphique caractéristique reconnue, de manière à détecter si l'utilisateur regarde au moins une représentation graphique caractéristique reconnue,
- on évalue la durée pendant laquelle l'utilisateur regarde ladite représentation graphique caractéristique,
- on détermine à partir de ladite durée évaluée, un paramètre représentatif de l'intérêt de l'utilisateur pour chaque représentation graphique caractéristique regardée,
- on sélectionne à partir desdits paramètres représentatifs, au moins une représentation graphique caractéristique pour une analyse sémantique dudit au moins un mot identifiant ladite représentation graphique caractéristique.

3. Procédé selon l'une des revendications 1 ou 2, comprenant une étape (El') dans laquelle on définit un réseau sémantique pour l'analyse sémantique desdits mots.

4. Procédé selon l'une quelconque des revendications 1 à 3, comprenant une étape dans laquelle on mémorise et met à jour les critères d'intérêt déterminés par l'analyse sémantique dans une base de données de profils d'utilisateurs (P1).

5. Procédé selon la revendication 4, comprenant les étapes suivantes:
- on reçoit au moins une information concernant l'ensemble des contenus multimédia visionnés par l'utilisateur (1), ainsi que les représentations graphiques caractéristiques reconnues dans chaque contenu multimédia visionné par l'utilisateur (1),
- on calcule pour chaque représentation graphique caractéristique reconnue une fréquence d'affichage associée, et
- on mémorise dans la base de données de profils d'utilisateurs (P1) lesdits mots identifiant les représentations graphiques caractéristiques reconnues et les fréquences d'affichage associées.

6. Procédé selon l'une quelconque des revendications 1 à 5, dans lequel lesdits critères d'intérêt déterminés comportent des données descriptives déduites relatives à ladite représentation graphique caractéristique et/ou audit contenu visionné.

7. Procédé selon la revendication 6, dans lequel ledit contenu visionné est associé à un contexte descriptif et dans lequel les données descriptives déduites permettent de mettre à jour ledit contexte.

8. Procédé pour délivrer des contenus de données adaptés à un utilisateur d'un terminal, comprenant les étapes suivantes :
- on reçoit des critères d'intérêt déterminés par un procédé de détermination de critères d'intérêt à partir d'un contenu multimédia visionné par l'utilisateur selon l'une quelconque des revendications 1 à 7,
- on sélectionne un contenu de données à délivrer à l'aide des critères d'intérêt reçus, et
- on délivre ledit contenu de données sélectionné.

9. Procédé selon la revendication 8, dans lequel ledit contenu visionné est associé à un contexte descriptif, ledit procédé comportant une étape dans laquelle on sélectionne un contenu de données à délivrer à partir du contexte dudit contenu visionné par l'utilisateur mis à jour à l'aide desdits critères d'intérêt.

10. Procédé selon l'une des revendications 8 ou 9, comprenant une étape dans laquelle on sélectionne un contenu de données à délivrer à partir de fréquences d'affichage de représentations graphiques caractéristiques reconnues mémorisées dans une base de données de profils d'utilisateurs (P1).

11. Procédé selon l'une quelconque des revendications 8 à 10, dans lequel ledit contenu à délivrer est un contenu spontané promotionnel.

12. Dispositif de détermination de critères d'intérêt d'un utilisateur d'un terminal à partir d'un contenu multimédia visionné par l'utilisateur comprenant au moins un moyen de traitement pour :
- vérifier si ledit contenu visionné est adapté pour être analysé de manière à reconnaître une représentation graphique caractéristique,
- reconnaître au moins une représentation graphique caractéristique affichée dans ledit contenu visionné,
- identifier ladite représentation graphique caractéristique par au moins un mot, et
- analyser de façon sémantique ledit au moins un mot, de manière à déterminer au moins un critère d'intérêt de l'utilisateur.

13. Dispositif pour délivrer des contenus de données adaptés à un utilisateur d'un terminal, comportant au moins un moyen de traitement (M17) pour :
- recevoir des critères d'intérêt transmis par un dispositif de détermination de critères d'intérêt à partir d'un contenu multimédia visionné par l'utilisateur (1) selon la revendication 12,
- sélectionner un contenu de données à délivrer à partir de ces critères d'intérêt, et
- délivrer ledit contenu de données sélectionné.
